(19) Europäisches Patentamt / European Patent Office / Office européen des brevets

(11) EP 3 829 113 B1

(12) **EUROPEAN PATENT SPECIFICATION**

(45) Date of publication and mention of the grant of the patent:
**03.07.2024 Bulletin 2024/27**

(21) Application number: **19212180.4**

(22) Date of filing: **28.11.2019**

(51) International Patent Classification (IPC):
**H04L 43/04** *(2022.01)*   **H04L 43/08** *(2022.01)*
H04L 43/0823 *(2022.01)*   H04L 43/0882 *(2022.01)*
H04L 43/0894 *(2022.01)*

(52) Cooperative Patent Classification (CPC):
**H04L 43/04; H04L 43/08;** H04L 43/0823;
H04L 43/0882; H04L 43/0894

(54) **METHOD FOR MONITORING QUALITY OF TRANSMISSION CONDITIONS IN A NETWORK, CORRESPONDING DEVICE, COMPUTER PROGRAM PRODUCT AND COMPUTER-READABLE CARRIER MEDIUM**

VERFAHREN ZUR ÜBERWACHUNG DER QUALITÄT VON ÜBERTRAGUNGSBEDINGUNGEN IN EINEM NETZWERK, ENTSPRECHENDE VORRICHTUNG, COMPUTERPROGRAMMPRODUKT UND COMPUTERLESBARES TRÄGERMEDIUM

PROCÉDÉ DE SURVEILLANCE DE LA QUALITÉ DES CONDITIONS DE TRANSMISSION DANS UN RÉSEAU, DISPOSITIF CORRESPONDANT, PRODUIT DE PROGRAMME INFORMATIQUE ET SUPPORT DE TRANSPORT LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.06.2021 Bulletin 2021/22**

(73) Proprietor: **THOMSON LICENSING**
**35510 Cesson-Sévigné (FR)**

(72) Inventors:
• **JEANNE, Ludovic**
  **35576 CESSON-SEVIGNE (FR)**
• **ADAM, Franck**
  **35576 CESSON-SEVIGNE (FR)**
• **LE ROUX, Yannick**
  **35576 CESSON-SEVIGNE (FR)**

(74) Representative: **Vidon Brevets & Stratégie**
**16B, rue de Jouanet**
**BP 90333**
**35703 Rennes Cedex 7 (FR)**

(56) References cited:
**EP-A1- 2 348 680**   **WO-A1-02/103943**

• **HYUN JONG KIM ET AL: "QoE assessment model for video streaming service using QoS parameters in wired-wireless network", ADVANCED COMMUNICATION TECHNOLOGY (ICACT), 2012 14TH INTERNATIONAL CONFERENCE ON, IEEE, 19 February 2012 (2012-02-19), pages 459-464, XP032153102, ISBN: 978-1-4673-0150-3**
• **ZHU GUOWEI ET AL: "User Mapping Strategies in Multi-Cloud Streaming: A Data-Driven Approach", 2016 IEEE GLOBAL COMMUNICATIONS CONFERENCE (GLOBECOM), IEEE, 4 December 2016 (2016-12-04), pages 1-6, XP033059088, DOI: 10.1109/GLOCOM.2016.7842366 [retrieved on 2017-02-02]**

**Description**

**1. Field of the disclosure**

The present disclosure relates generally to the field of transmission and reception systems in networks. More particularly, the present disclosure relates to a technique that allows measuring quality of channels for transmitting and receiving data in a system which includes at least two devices which are connected through a network.

**2. Background**

The present section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

In the field of data transmission in networks, some data transmission/reception equipment may be severely impacted by some variation of the quality of received signal. This particularly true in systems which require real time transmission and/or reception of data. For example, in a local area network (LAN) or a home area network (HAN), a device may need to receive real-time data, from another device. Real time data may for example be TV program which is provided by an operator (i.e. Verizon™, T-Mobile™, Orange™, Deutsche Telekom™, etc.). Real time data may also be video and/or audio representing execution of software somewhere in another network and coming from one or several servers. Among the target services, one can consider that streamed data originating from the execution of a game (such as FPS games) in the cloud are real time data (for example Google™ Stadia™).

More generally, one can consider real time data are data which are transmitted (and received) with time constraint and order constraint, both of these constraints determining the possibility of transmitting and/or receiving real-time data in acceptable conditions.

For achieving reception and/or transmission of real-time data in good conditions (guarantying efficient treatment of these data), it may be necessary to obtain information on whether the reception/transmission conditions are good or not. For example, in a home area network, it may be interesting to obtain information on the quality of the signal that is received by a device. For example, it may be interesting to obtain an indication of the quality of a wireless signal (e.g. Wi-Fi signal) so as to determine whether conditions are good or not.

Usually, monitoring quality of signal received in networks, and more specifically in wireless network, is based on a single measurement: the arrangement of wireless devices within a wireless network and the overall quality of the reception and transmission condition is often determined on the basis of received signal strength indicator (RSSI) values that each indicates the distance between two wireless devices and the strength of the received signal. The RSSI is thus used so as a kind of representation of the quality of the wireless link.

However, the sole strength of a received signal may not be enough to determine whether a given device may be able to properly receive real-time data in a network. Indeed, for Wi-Fi networks, the Wi-Fi quality is highly dependent of several criteria; the RSSI (signal indicator) level is not sufficient for knowing if a Wi-Fi connection is good enough for example for IPTV UDP/Multicast communication.

It would hence be desirable to provide a technique that would avoid at least some of these drawbacks of the prior art, and that would notably allow obtaining relevant information on whether wireless transmission conditions are suitable for real-time data transmission or not. IEEE publication "QoE assessment model for video streaming service using QoS parameters in wired-wireless network", HYUN JONG KIM ET AL, relates to a QoE assessment model for video streaming service using QoS parameters in wired-wireless network. This IEEE publication discloses how to calculate a normalized QoS value which reflects the network performance and how to calculate a video streaming service QoE by using this normalized QoS value. Another IEEE publication "User Mapping Strategies in Multi-Cloud Streaming: A Data-Driven Approach", ZHU GUOWEI ET AL, relates to an algorithms to identify users whose QoE are mostly affected by QoS and assign users to servers so that an overall QoE can be maximized. This IEEE publication discloses normalizing QoS factors and then combining these normalized QoS factors into one unified QoS indicator. European Patent Application EP2348680 A1 relates to acquiring a description information of network service quality based on the actual use information of network quality parameter. EP2348680 A1 discloses normalizing a transmission bandwidth, a network delay and a network packet loss ratio according to initial QoS data.

**3. Summary**

According to the present disclosure, a method for monitoring quality of transmission conditions in a communications network is proposed. The method is implemented by a monitoring device connected to a transmitting device in the communications network. The method includes a first phase and a second phase according to independent claim 1.

According to the disclosure, the signal is a received signal and the at least three specific characteristics of the received signal belong to the group which comprises the *"PHY rate"* of the last received data frame by the monitoring device, the remaining available time for transmission *"Tx opportunity"* and the percentage of reception *"Frame retries"*. Combination of these three characteristics of the received signal allows summarizing the quality of the signal for real-time data reception.

According to the disclosure, the signal is a transmission signal and the at least three specific characteristics of said transmission signal belong to the group comprising: the *"PHY rate"* of the last transmitted data frame by said monitoring device, the remaining available time for transmission *"Tx opportunity"* and the percentage of transmission "Frame retries". Combination of these three characteristics of the received signal allows summarizing the quality of the signal for real-time data transmission.

According to the disclosure, the first phase for determining instant composite QoS indicators includes: storing the instant composite QoS indicator in a memory of the monitoring device and stopping the process during a given period of time.

According to the disclosure, the given period of time is closed to several seconds. Since The reception quality may be variable (for example with Wi-Fi technology), a period of two seconds could be a good compromise to capture these variations, without generating too much data to analyze.

According to the disclosure, normalizing the caught values, according to a normalizing scheme associated to the three specific characteristics of the received signal includes transforming each caught value in a percentage representing the quality of the caught value.

According to the disclosure, calculating an instant composite QoS indicator as a function of the at least three normalized values includes multiplying each normalized value with each other.

According to the disclosure, the second phase for determining weighted composite QoS indicators includes selecting, among available instant composite QoS indicators a set of instant composite QoS indicators representing a predetermined period of time.

According to the disclosure, the predetermined period of time is equal to one minute.

The present disclosure also relates to a monitoring device for monitoring quality of transmission conditions according to independent claim 10. caught values, a normalizing module for normalizing the caught values, according to a normalizing scheme associated to the three specific characteristics of the signal, delivering at least three normalized values and a calculation unit for calculating an instant composite QoS indicator as a function of the at least three normalized values.

Another aspect of the present disclosure pertains to a computer program product downloadable from a communication network and/or recorded on a medium readable by a computer and/or executable by a processor, comprising program code instructions for implementing the method as described above.

In addition, the present disclosure also concerns a non-transitory computer-readable medium comprising a computer program product recorded thereon and capable of being run by a processor, including program code instructions for implementing the method as described above.

A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

It is to be understood that both the foregoing general description and the following detailed description are exemplary and explanatory and are not restrictive of the disclosure, as claimed.

The invention is defined by the appended independent claims. Preferred embodiments of the invention are defined by the dependent claims.

## 4. Brief description of the drawings

The present disclosure can be better understood with reference to the following description and drawings, given by way of example and not limiting the scope of protection, and in which:

- **Figure 1** is a flow chart for illustrating the general principle of the proposed technique for monitoring quality of transmission condition in a network in which the proposed technique is implemented;
- **Figure 2** is a schematic diagram showing the system in which the proposed technique is implemented; and
- **Figure 3** is a schematic block diagram illustrating an example of a device for monitoring quality of transmission condition in a network.

The components in the figures are not necessarily to scale, emphasis instead being placed upon illustrating the principles of the disclosure.

## 5. Detailed description

The present disclosure relates to a method that allows determining transceiving (transceiving stands for transmitting and/or receiving) conditions over a network. This objective is reached, according to the disclosure, by combining measures of at least three characteristics of signal. A calculation is made, based on these characteristics, for providing an instant composite QoS indicator. The composite QoS indicator is more likely to provide a good indication on whether real-time data will be efficiently processed by the networks or not. Additionally, the instant composite QoS indicator can itself be processed to provide a long-time composite indicator which is likely to be stored for further analysis.

As it will be described with more details hereinafter with reference to the accompanying figures, it is proposed in one embodiment of the present disclosure to use a combination of three pieces of data, which are obtained in a continuous way, directly from the physical layer or by a driver of a device included in a network. Each of these three pieces of data represent a characteristic of the signal. These three characteristics, when combined, represent an efficient indication on the ability of the link used in the network for transmitting real-time data between a transmitter and a receiver.

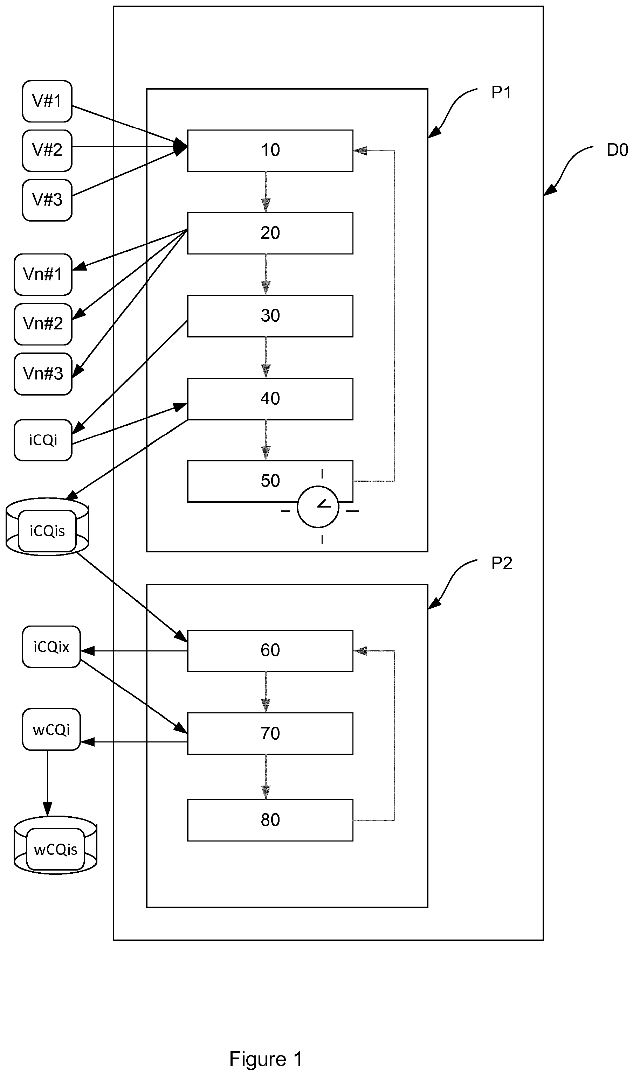

**Figure 1** is a flow chart describing the general method and the characteristics extracted from the link for obtaining the instant composite QoS indicator (iCQi) at a given measuring time. According to this general disclosure, a device (D0) which is included in a network (for example a local network) comprising at least two devices (e.g., D0, D1 etc.) is in charge of monitoring quality of transmission condition in a network in the form of instant composite QoS indicators (iCQis), based on at least three specific characteristics of a received signal, the signal varying in time. The device is called a monitoring device. The monitoring device implements, in a continuous or semi-continuous way, a first phase (P1) for determining instant composite QoS indicators (iCQis) which includes at least one iteration of the following steps:

- capturing (10) a piece of data representing the value of each characteristic of the at least three specific characteristics of the received signal, called a caught value (thus delivering at least three caught value v#1, v#2, v#3, one per characteristic);
- normalizing (20) the caught values, according to a normalizing scheme associated to the three specific characteristics of the received signal, delivering at least three normalized values (vn#1, vn#2, vn#3 one per characteristic);
- calculating (30) the instant composite QoS indicator (iCQi) as a function of the at least three normalized values;
- storing (40) the instant composite QoS indicator (iCQi);
- freezing (50) the process during a given period of time.

According to a specific embodiment, the at least three specific characteristics belong to the group comprising:

- PHY rate of the last received data frame;
- Tx opportunity that is the remaining available time for transmission;
- Frame retries.

Thus, the instant composite QoS indicator (iCQi) is a mix of three values, each of them being representative of one among these above three characteristics. These specific characteristics are selected, among several available characteristics, since they are, when combined (mixed), suitable to represent the quality of the signal received by the monitoring device for representing the ability of the signal to transport real-time data efficiently.

The way the three values are normalized is a function of the characteristics themselves and of defined ceilings and thresholds. In one embodiment, the normalized values are between 0 and 1. In other embodiments and variants, normalized values may be between 0 and 100% or between -1 and 1, the 0-value representing for example a minimum requirement for a characteristic. Detailed explanations on the normalization are given herein above in connection with a specific embodiment.

Once the values are normalized, according to their respective normalization scheme, the normalized values are combined, also according to a combination scheme, which is function of the form the target score has to be obtained. More specifically, in one embodiment, the normalized values are multiplied for delivering the instant composite QoS indicator (iCQi) which is then stored in the memory of the monitoring device.

According to a specific feature, the monitoring device is, in the network, the device which should receive the real-time data. Thus, in this context, the monitoring device is able to indicate, to the transmitting device, whether it will able to receive and process the real-time data. In another embodiment, the monitoring device is the transmitting device, which is able to continuously monitor the quality of the links with receiving devices, and to decide whether it will adapt or not the content to transmit through the link(s) as a function of the indicator(s) (for example, one indicator per link). It is thus possible to apply the same technique at the level of the transmitter. In this case, the three specific characteristics (associated with a receiver device) are:

- Tx (transmission) data rate (instead of Rx (reception) data rate);
- Tx (transmission) retries (instead of Rx (reception) retries);
- Txop remains unchanged.

For example, this allows an access point (AP) (example.g., a gateway) to monitor the QoS for each connected client. The result is similar/equivalent to the analysis done when the code is executed in the receiving device (knowing that a given client is connected to only one AP at one time).

Since obtaining and storing many values of the instant composite QoS indicator (iCQi) may lead to the accumulation of a huge quantity of data, a so-called compression phase (P2) is implemented. The objective of this compression phase is to reduce the size of the logs while keeping valuable data available for further analysis. Compression phase (P2) is independent of the monitoring phase (P1), and both phases can run in parallel in separate threads.

As previously discussed, obtaining an instant indicator of the quality of the link (or channel) is valuable for an instant analysis. However, an objective of the disclosure is also to provide source data for long time analysis (for example, between one day and one year). A further objective is to allow determining, over a long period, the possible interfering causes of a bad quality for a link. While retaining instant indicator on a short period is feasible, doing so for a (very) long time is difficult. One approach to overcoming this difficulty is to summarize data, on a continuous basis, for allowing more detailed analysis posteriori. What has to be understood is that, according to the disclosure, for a posteriori analysis, the "bad" events are more important than the good ones. It is indeed supposed that the link or channel is more often in good conditions for transmitting than in bad condition. So the compression phase should have the ability to summarize instant composite QoS indicators (iCQis) so that bad values of this indicators are put forward. For a given set of instant composite QoS indicators (iCQis) the compression is to produce a weighted composite QoS indicator (wCQi). The weighted composite QoS indicator (wCQi) is the result of an integration made in a set of instant composite QoS indicators (iCQis) where the bad values of an instant composite QoS indicators are more important than the good ones. For creating an instant composite QoS indicator (iCQi) a weighted average is calculated on a given period of time (for example, one minute) for a set of instant composite QoS indicators (iCQis). The calculated weighted average is an adaptive one (adaptative average). According to other possibilities, which are not part of the invention, a weighted average could be calculated for each value (PHY rate, Tx opportunities, retries) of the instant composite QoS indicator (iCQi) and then the resulting three weighted averages are combined to produce the weighted composite QoS indicator (wCQi), also for a given period of time. Other methods, which are neither part of the invention, could be used to summarize a set of instant composite QoS indicators (iCQis).

Thus, the second phase for determining weighted composite QoS indicators, as a function of at least one set of instant composite QoS indicators previously determined in the first phase, generally includes at least one iteration of selecting (60) a given set of instant composite QoS indicators (iCQix) among the available instant composite QoS indicators (iCQis) and calculating (70) a weighted composite QoS indicators (wCQi) comprising multiplying a predetermined weight to each instant composite QoS indicator of the selected set of instant composite QoS indicators (iCQix) and deleting (80) the set of instant composite QoS indicators (iCQix) from the available instant composite QoS indicators (iCQis). These steps are done in a continuous or semi continuous way, depending on parametrization. The weighted composite QoS indicators (wCQi) is logged, along with other physical values (notably timestamps, RSSI) in a database for future use, as explained herein after.

Above, a specific embodiment of the disclosure is described. This disclosure may, however, be embodied in many alternate forms and should not be construed as limited to the embodiments set forth herein. Accordingly, while the disclosure is susceptible to various modifications and alternative forms, specific embodiments thereof are shown by way of example in the drawings and will herein be described in detail. It should be understood, however, that there is no intent to limit the invention to the particular forms disclosed, but the present invention is defined in the appended independent claims to which reference should be made. Advantageous features are set out in the appended dependent claims. In the drawings, like or similar elements are designated with identical reference signs throughout the several views thereof.

While not explicitly described, the present embodiments and variants may be employed in any combination or sub-combination.

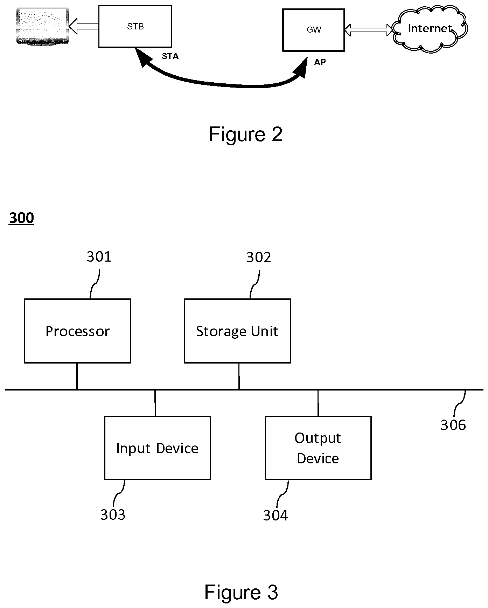

**Figure 2** is a flow chart for describing a specific embodiment of the proposed method in a context of a wireless (home) network, adapted to transmit and receive data thru a Wi-Fi link, shared between at least one gateway, connected to the internet (xDsl, Optical Fiber, etc.) and a set top box, connected to the Gateway by using a Wi-Fi technology.

In this context, the set top box (STB) is a Wi-Fi client connected on a Wi-Fi Access Point (AP) which is integrated into the Gateway (GW) and provides an internet access to the client. In this embodiment, since the STB is supposed to receive data from the gateway, and more precisely video data, it is important to identify whether the Wi-Fi link quality is compatible or not for IPTV over Wi-Fi.

Internet Protocol television (IPTV) stands for delivery of television content over Internet Protocol (IP) networks. Unlike downloaded media, IPTV allows streaming the source media continuously, in real-time, synchronized with the source. As a result, a client media player can begin playing the content (such as a TV channel) almost immediately. IPTV uses the Internet protocol and requires important availability of the link which is used to transmit and receive content. Indeed, in IPTV, video frames are coming from the WAN interface of the gateway, and are transmitted to the STB client. In the context of this embodiment videoframes are transmitted through the Wi-Fi link, and it is important to determine the quality of the link. One can note that streaming video games may also use streaming for transmitting data frames to a client. The problem of monitoring the quality of the Wi-Fi link is also present for streaming video games.

Thus, in this embodiment, The STB shall monitor and record the quality of the Wi-Fi link. This monitoring is done in a continuous way, (e.g., every two seconds). The Wi-Fi channel may vary quickly at the speed at which Wi-Fi equipment decides to access the Internet. Wi-Fi handles small queries pretty well and there's thus little need to go below 500ms. However, beyond 5 seconds, one could begin to miss critical events, which is not a good thing considering the adaptative average which is done after: one can hardly accept to lose events while making the extensive measuring. As a consequence, for Wi-Fi, one can select a capturing value between 0.5 and 3 seconds. In this embodiment, 2 seconds have been chosen.

The three characteristics that have been selected for monitoring the Wi-Fi quality are expressed in percentage and are, like previously exposed:

- the *"PHY rate"* of the last received data frame;
- the *"Tx opportunity"* that is the remaining available time for transmission;
- the *"Frame retries"*.

In this embodiment, the instant Wi-Fi QoS composite indicator is a combination of the values of these three characteristics, delivering an instant Wi-Fi QoS composite indicator every two seconds.

However, this instant Wi-Fi QoS composite indicator is not the only logged value. For example, *"RSSI", "Channel number", "Tx", "Inbss", "Obss" and "Nocat times"* are added too in the logged file. In this embodiment *"Tx". "Inbss", "Obss", "Nocat"* and *"Txop times" values* (express in %) are extracted and processed from the Wi-Fi driver, in the following way:

- "tx": transmission time (in % of time);
- "inbss": reception time (in % of time) for frames received from devices in the same Wi-Fi network (raw value returned by the driver);
- "obss": data frames from others Wi-Fi AP (in % of time) (raw value returned by the driver);
- "nocat": others not categorized frames (in % of time) (raw value returned by the driver);
- "nopkt": frames with bad reception (in % of time).

The *"nocat"* value actually contains data that should be reported in the values "inbss" and "obss" provided by the driver.

So one ventilates a part of the "nocat" between "inbss" and "obss"; the corrected values are BSS (tx + inbss +% nocat) and OBSS (obss +% nocat). It was observed that the "obss" part in "nocat" was weighted at 60%, while that relative to "inbss" was weighted at 40%..

Thus, the previous values ("tx", "nocat", "inbss", etc.) are used as input values for generating three other statistics:

-

$$OBSS = obss + \frac{(nocat-2)\times 60\% obss}{(40\% tx + 60\%(inbss+obss))}$$

-

OBSS: obss + (nocat-2) x 60%obss / (40%tx+60%(inbss+obss)) (The "-2" is a heel to keep from originating "nocat" original; the error introduced remains weak);

-

$$BSS = tx + inbss + (nocat - 2) - \frac{(nocat-2)\times 60\%obss}{(40\%tx+60\%(inbss+obss))}$$

BSS: tx+inbss + (nocat-2) - (nocat-2) x 60%obss / (40%tx+60%(inbss+obss));

- OTHER: 100-BSS-OBSS-txop.

OBSS value represents the time consumed by the others Wi-Fi networks present on the same Wi-Fi channel; this is typically a representation of the time consumed by the neighbors. BSS value represents the time consumed by all the devices connected in the Wi-Fi AP (AP included) where is connected the STB. OTHER value represents errors, power save, interferers and unusable time.

These values are also logged every two seconds along with the instant Wi-Fi QoS composite indicator.

In this embodiment, normalization of the values for the three characteristics is done as a function of a normalization scheme, adapted to each characteristic.

The *"Rx PHY rate"* value, for a STB (*Else Tx PHY rate is executed in the AP; because we are always monitoring the downstream traffic transmitted by AP and received by a client),* is normalized between 0 and 100 % according to the following specific scheme:

- If the value "Rx PHY_rate" < 150Mbps, the normalized value Ind_PHY_rate is set to 0;
- If the value "Rx PHY_rate" > 150Mbps and "Rx PHY_rate" < 600Mbps, the normalized value Ind_PHY_rate is set to (100 * (PHY_rate-150) / (600-150)) which is equal to:

$$\mathrm{Ind}_{PHY_{rate}} = \frac{2PHY\_rate}{9} - \frac{100}{3}$$

- If the value "Rx PHY_rate" > 600Mbps, the normalized value Ind_PHY_rate is set to 100;

The *"Tx opportunity"* value is normalized between 0 and 100 % according to the following specific scheme:

- If the value *"Txop"* is between 0 and 5 %, the normalized value *Ind_Txop* is set to 20%: this is because even if the link is not available at a given moment, this does not mean that it will not became available at another moment;
- If the value *"Txop"* is between 5 and 25 %, the normalized value *Ind_Txop* is set to (80/(25-5)*(Txop-5) + 20) which is equal to:

$$\mathrm{Ind}_{Txop} = 4Txop$$

- If the value *"Txop"* > 25%, the normalized value *Ind_Txop* is set to 100%;

For the *"Frame retries"* value, the normalization is done according to the following scheme. The initial percentage (%) of retries is:

$$Retries = \frac{retries\_frames_{counter}}{rx\_frames_{counter}} \times 100$$

Then:

- If the value *"Retries"* is between 0 and 5 %, the normalized value *ind_Retries* is set to 100%: this is because the quantity of retries is considered as good;

- If the value *"Retries"* is between 5 and 20 %, the normalized value *ind_Retries* is set to (100-75/(20-5)*(Retries-5)) which is equal to:

$$ind_{Retries} = 75 - 5\ Retries$$

- If the value *"Retries"* > 20%, the normalized value ind_Retries is set to 25%;

If the *"rx frame counter"* is small (< 100, meaning there's no real Wi-Fi Rx activities), one set 100% for the *"ind_Retries"* value.

Once the values are normalized, the instant Wi-Fi QoS composite indicator is combined, in this embodiment, by calculating:

$$WiFi_{qos} = \frac{ind_{PHY_{rate}} \times ind_{Txop} \times ind_{Retries}}{10000} —$$

According to the disclosure, this is good indicator on the ability of the Wi-Fi link to transport IPTV frames for providing a suitable display of the frames on TV in synchronized and real-time environment. An adaptation can be performed as a function of the main frequency used (e.g. 5Ghz vs 2.4Ghz).

Only 5GHz is used for IPTV over Wi-Fi (the 2.4G is ignored). At 2.4GHz, you cannot do IPTV anymore, but the QoS algorithm can still be applied. It is nevertheless necessary to change the normalization of PHY rate because the rate at 2.4GHz is lower (100 / (100-25) * (rate-25) if 25 <rate <100).

As explained herein before, it may not be desirable to store all these values in memory (one every two seconds, along with other values txop, corrected OBSS, corrected BSS etc.). Indeed, according to the disclosure, a so-called compression step is implemented in which the values corresponding to the instant Wi-Fi QoS composite indicators are computed so as to represent what happened during one minute (delivering a weighted QoS indicator, wQoS, for one minute). This one-minute interval is for exemplary purposes only, and one can consider that other time compression intervals should be more desirable (30 seconds or 5 minutes for example).

Nevertheless, in this embodiment, each minute, the previous "two seconds" instant indicators are compressed using a weighted average. According to the disclosure, the compression of the samples must preserve the failure cases, because in the present situation, the failure is the information which is likely to better represent what happens on the link (a "standard" mean would lose the right information). Thus, a weighted average is calculated with the following weights: 1 for good, 10 for middle, 100 for bad, according to the following table:

| Threshold | Bad (w:100) | Middle (w:10) | Good (w:1) |
|---|---|---|---|
| Rx PHY rate (Mbps) | rate < 150 | 150 < rate < 600 | 600 < rate |
| Txop (%) | txop < 5 | 5 < txop < 25 | 25 < txop |
| Rx Retries (%) | rtry > 20 | 20 > rtry > 5 | rtry < 5 |
| *Qos WiFi* (%) | *qos < 10* | *10 < qos < 40* | *40 < qos* |

For embodiments related to AP, Tx PHY rate is measured.

In this embodiment, the last line of the table is used so as to calculate the summarized Wi-Fi QoS composite indicator (wQoS) for a one-minute time period.

Each minute statistic is timestamped (hh:mm in this example).

The following table is an example of a final logged content in this embodiment (4 RSSI values because there's four antenna on the device):

| time | Channel | data_rate_Mbps | 4_phy_rssi | | | | txop | retries | wQoS | BSS | OBSS | OTHER |
|---|---|---|---|---|---|---|---|---|---|---|---|---|
| *00:08* | *52* | *1300* | *-58* | *-53* | *-56* | *-54* | *17* | *0* | **68** | *14* | *57* | *12* |
| *00:09* | *52* | *1300* | *-59* | *-52* | *-56* | *-54* | *17* | *1* | **68** | *14* | *57* | *12* |
| *00:10* | *52* | *1300* | *-59* | *-53* | *-56* | *-54* | *17* | *1* | **70** | *14* | *57* | *10* |
| *00:11* | *52* | *1289* | *-59* | *-53* | *-56* | *-54* | *88* | *0* | **100** | *10* | *1* | *1* |

(continued)

| time | Channel | data_rate_Mbps | 4_phy_rssi | | | | txop | retries | wQoS | BSS | OBSS | OTHER |
|------|---------|----------------|------|------|------|------|------|---------|------|-----|------|-------|
| 00:12 | 52 | 1300 | -58 | -52 | -56 | -54 | 78 | 1 | **100** | 11 | 7 | 4 |
| 00:13 | 52 | 1295 | -58 | -52 | -56 | -54 | 58 | 0 | **100** | 16 | 19 | 7 |
| 00:14 | 52 | 1300 | -58 | -53 | -56 | -54 | 58 | 1 | **100** | 16 | 19 | 7 |
| 00:15 | 52 | 1300 | -58 | -53 | -56 | -54 | 58 | 0 | **100** | 16 | 19 | 7 |

It can be noticed, when reading the table presented above, that the standard "RSSI" indicator, which is widely used in the industry, is present for each antenna (namely four) of the monitoring device. It can be noticed that while data rate and RSSI remain constant, the weighted composite indicator (wQoSi) fluctuate: this is the demonstration that this indicator is more relevant than the RSSI.

The log content may be stored in the monitoring device or in another device (for example the gateway). According to a specific feature, the log file may be retrieved by a user of the network (or by an administrator or an employee of the operator) for providing an analysis of the transmission and/or reception conditions of signal within the network for a more or less long time period.

**Figure 3** shows a schematic block diagram illustrating an example of a monitoring device 300 for monitoring quality of transmission conditions in a network, according to an embodiment of the present disclosure. In an embodiment, such a device 300 may be a standalone device that can be connected to a home network or a local area network. The device can also be directly integrated in an equipment provided by an operator (like a set-top box or a gateway) for example.

The device 300 includes a processor 301, a storage unit 302, an input device 303, an output device 304, and an interface unit 305 which are connected by a bus 306. Of course, constituent elements of the device 300 may be connected by a connection other than a bus connection using the bus 306.

The processor 301 controls operations of the monitoring device 300. The storage unit 302 stores at least one program to be executed by the processor 301, and various data, including for example parameters used by computations performed by the processor 301, intermediate data of computations performed by the processor 301 such as the captured values, the normalized values produced by components or functions embedded within the device 300, and so on. The processor 301 is formed by any known and suitable hardware, or software, or a combination of hardware and software. For example, the processor 301 is formed by dedicated hardware such as a processing circuit, or by a programmable processing unit such as a CPU (Central Processing Unit) that executes a program stored in a memory thereof.

The storage unit 302 is formed by any suitable storage or means capable of storing the program, data, or the like in a computer-readable manner. Examples of the storage unit 302 include non-transitory computer-readable storage media such as semiconductor memory devices, and magnetic, optical, or magneto-optical recording media loaded into a read and write unit. The program causes the processor 301 to perform a method for monitoring data transmission conditions according to an embodiment of the present disclosure as described previously. More particularly, the program causes the processor 301 to compute captured values from at least three specific characteristics of a given signal, so that the instant composite QoS indicator (iCQi) be calculated, time stamped and stored, according to a given periodicity.

The input device 303 is used to obtain the raw values associated with each specific characteristic that is selected. The input device may take the form of a driver of a receiving component of the monitoring device.

The output device 304 is formed for example by a processing unit configured to take decision or inform on receiving conditions as a function of a set of instant composite QoS indicator (iCQi) or one or several weighted composite QoS indicator (wCQi).

Although only one processor 301 is shown on figure 3, it must be understood that such a processor may include different modules and units embodying the functions carried out by device 300 according to embodiments of the present disclosure, such as the unit previously described in relation with figure 1. These modules and units may also be embodied in several processors 301 communicating and co-operating with each other.

While the disclosure has been described with reference to exemplary embodiments, it is to be understood that the disclosure can be embodied in various forms, and is not to be limited to the examples discussed above. More particularly, the environment where the monitoring device is implemented may include more than one link to monitor. The scope of protection of the invention is solely defined by the appended claims.

**Claims**

**1.** A method for monitoring quality of transmission conditions in a communications network, the method being implemented by a monitoring device connected to a transmitting device in the communications network, **wherein** the method comprises:

- a first phase for determining at least one set of instant composite QoS indicators which comprises at least two iterations of:

- capturing (10) a piece of data representing the value of each characteristic among at least three specific characteristics of a signal, called a caught value, and delivering at least three caught values;
- normalizing (20) the caught values, according to a normalizing scheme associated to the three specific characteristics of the received signal, and delivering at least three normalized values; and
- calculating (30) an instant composite QoS indicator as a function of the at least three normalized values; and

- a second phase for determining (70) a weighted composite QoS indicator, as a function of said at least one set of instant composite QoS indicators previously determined in the first phase, the second phase comprising:

- multiplying a predetermined weight to each instant composite QoS indicator of the set of instant composite QoS indicators;

and wherein the weighted composite QoS indicator is an adaptative weighted composite QoS indicator.

2. The method according to claim 1, wherein the signal is a received signal and wherein the at least three specific characteristics of the received signal belong to the group comprising:

- a *"PHY rate"* of the last received data frame by the monitoring device;
- a remaining available time for transmission *"Tx opportunity"*; and
- a percentage of reception *"Frame retries"*.

3. The method according to claim 1, wherein the signal is a transmission signal and wherein the at least three specific characteristics of said transmission signal belong to the group comprising:

- a *"PHY rate"* of the last transmitted data frame by said monitoring device;
- a remaining available time for transmission *"Tx opportunity"*; and
- a percentage of transmission "Frame retries".

4. The method according to claim 1, wherein the first phase for determining instant composite QoS indicators comprise:

- storing the instant composite QoS indicator in a memory of the monitoring device; and
- stopping the process during a given period of time.

5. The method according to claim 4, wherein given period of time is comprised between 0.5 and to 3 seconds.

6. The method according to claim 1, wherein normalizing the caught values, according to a normalizing scheme associated to the three specific characteristics of the signal comprise transforming each caught value in a percentage representing the quality of the caught value.

7. The method according to claim 1, wherein calculating an instant composite QoS indicator as a function of the at least three normalized values comprise multiplying each normalized value with each other.

8. The method according to claim 1, wherein a second phase for determining weighted composite QoS indicators comprise selecting, among available instant composite QoS indicators a set of instant composite QoS indicators representing a predetermined period of time.

9. The method according to claim 8, wherein the predetermined period of time is equal to one minute.

10. A monitoring device (300) for monitoring quality of transmission conditions in a communications network, connected to a transmitting device in the communications network, wherein the monitoring device comprises:

- a capturing module for capturing a piece of data representing the value of each characteristic among at least

EP 3 829 113 B1

three specific characteristics of the received signal, called a caught value, and delivering at least three caught values;
- a normalizing module for normalizing the caught values, according to a normalizing scheme associated to the three specific characteristics of the received signal, and delivering at least three normalized values; and
- a calculation unit for calculating an instant composite QoS indicator as a function of the at least three normalized values,
the three aforementioned modules being iteratively implemented for producing at least one set of instant composite QoS indicators;
- a determining module for determining a weighted composite QoS indicator,

as a function of said at least one set of instant composite QoS indicators previously calculated, the determining module comprising a multiplying unit for multiplying a predetermined weight to each instant composite QoS indicator of the set of instant composite QoS indicators,
and the weighted composite QoS indicator is an adaptative weighted composite QoS indicator.

11. A computer program product downloadable from a communication network and/or recorded on a medium readable by a computer and/or executable by a processor, comprising program code instructions for implementing a method according to any one of claims 1 to 9.

12. A non-transitory computer-readable medium comprising a computer program product recorded thereon and capable of being run by a processor, including program code instructions for implementing a method according to any one of claims 1 to 9.

**Patentansprüche**

1. Verfahren zum Überwachen der Qualität von Sendebedingungen in einem Kommunikationsnetz, wobei das Verfahren durch eine Überwachungsvorrichtung implementiert wird, die mit einer Sendevorrichtung in dem Kommunikationsnetz verbunden ist,
   **wobei** das Verfahren umfasst:

   - eine erste Phase zum Bestimmen mindestens eines Satzes momentaner Verbund-QoS-Indikatoren, die mindestens zwei Iterationen umfasst von:

      - Erfassen (10) eines Datenelements, das den Wert jeder Eigenschaft unter mindestens drei spezifischen Eigenschaften eines Signals repräsentiert, ein aufgefangener Wert genannt, und Liefern mindestens dreier aufgefangener Werte;
      - Normieren (20) der aufgefangenen Werte in Übereinstimmung mit einem Normierungsschema, das den drei spezifischen Eigenschaften des Empfangssignals zugeordnet ist, und Liefern mindestens dreier normierter Werte; und
      - Berechnen (30) eines momentanen Verbund-QoS-Indikators als eine Funktion der mindestens drei normierten Werte; und

   - eine zweite Phase zum Bestimmen (70) eines gewichteten Verbund-QoS-Indikators als eine Funktion des mindestens einen Satzes momentaner Verbund-QoS-Indikatoren, die zuvor in der ersten Phase bestimmt wurden, wobei die zweite Phase umfasst:

      - Multiplizieren eines vorgegebenen Gewichts mit jedem momentanen Verbund-QoS-Indikator des Satzes momentaner Verbund-QoS-Indikatoren;

   und wobei der gewichtete Verbund-QoS-Indikator ein adaptiver gewichteter Verbund-QoS-Indikator ist.

2. Verfahren nach Anspruch 1, wobei das Signal ein Empfangssignal ist und wobei die mindestens drei spezifischen Eigenschaften des Empfangssignals zu der Gruppe gehören, die umfasst:

   - eine *"PHY-Rate"* des durch die Überwachungsvorrichtung zuletzt empfangenen Datenrahmens;
   - eine verbleibende verfügbare Zeit für die Sendung *"Tx-Gelegenheit"*; und
   - einen Prozentsatz der *Empfangs-"Rahmenwiederholungen"*.

3. Verfahren nach Anspruch 1, wobei das Signal ein Sendesignal ist und wobei die mindestens drei spezifischen Eigenschaften des Sendesignals zu der Gruppe gehören, die umfasst:

  - eine *"PHY-Rate"* des durch die Überwachungsvorrichtung zuletzt gesendeten Datenrahmens;
  - eine verbleibende verfügbare Zeit für die Sendung *"Tx-Gelegenheit";* und
  - einen Prozentsatz der Sende-"Rahmenwiederholungen".

4. Verfahren nach Anspruch 1, wobei die erste Phase zum Bestimmen momentaner Verbund-QoS-Indikatoren umfasst:

  - Speichern des momentanen Verbund-QoS-Indikators in einem Speicher der Überwachungsvorrichtung; und
  - Anhalten des Prozesses während einer gegebenen Zeitdauer.

5. Verfahren nach Anspruch 4, wobei die gegebene Zeitdauer zwischen 0,5 und bis zu 3 Sekunden umfasst.

6. Verfahren nach Anspruch 1, wobei das Normieren der aufgefangenen Werte gemäß einem den drei spezifischen Eigenschaften des Signals zugeordneten Normierungsschema das Transformieren jedes aufgefangenen Werts in einen Prozentsatz, der die Qualität des aufgefangenen Werts repräsentiert, umfasst.

7. Verfahren nach Anspruch 1, wobei das Berechnen eines momentanen Verbund-QoS-Indikators als eine Funktion der mindestens drei normierten Werte das Multiplizieren jedes normierten Werts mit jedem anderen umfasst.

8. Verfahren nach Anspruch 1, wobei eine zweite Phase zum Bestimmen gewichteter Verbund-QoS-Indikatoren das Auswählen eines Satzes momentaner Verbund-QoS-Indikatoren, die eine vorgegebene Zeitdauer repräsentieren, unter den verfügbaren momentanen Verbund-QoS-Indikatoren umfasst.

9. Verfahren nach Anspruch 8, wobei die vorgegebene Zeitdauer gleich einer Minute ist.

10. Überwachungsvorrichtung (300) zum Überwachen der Qualität von Sendebedingungen in einem Kommunikationsnetz, wobei die Überwachungsvorrichtung mit einer Sendevorrichtung in dem Kommunikationsnetz verbunden ist, wobei die Überwachungsvorrichtung umfasst:

  - ein Erfassungsmodul zum Erfassen eines Datenelements, das den Wert jeder Eigenschaft unter mindestens drei spezifischen Eigenschaften des Empfangssignals repräsentiert, ein aufgefangener Wert genannt, und zum Liefern mindestens dreier aufgefangener Werte;
  - ein Normierungsmodul zum Normieren der aufgefangenen Werte in Übereinstimmung mit einem Normierungsschema, das den drei spezifischen Eigenschaften des Empfangssignals zugeordnet ist, und zum Liefern mindestens dreier normierter Werte; und
  - eine Recheneinheit zum Berechnen eines momentanen Verbund-QoS-Indikators als eine Funktion der mindestens drei normierten Werte;
  wobei die drei obenerwähnten Module iterativ implementiert werden, um mindestens einen Satz momentaner Verbund-QoS-Indikatoren zu erzeugen,
  - ein Bestimmungsmodul zum Bestimmen eines gewichteten Verbund-QoS-Indikators als eine Funktion des mindestens einen Satzes zuvor berechneter momentaner Verbund-QoS-Indikatoren, wobei das Bestimmungsmodul eine Multiplikationseinheit zum Multiplizieren eines vorgegebenen Gewichts mit jedem momentanen Verbund-QoS-Indikator des Satzes momentaner Verbund-QoS-Indikatoren umfasst;
  und wobei der gewichtete Verbund-QoS-Indikator ein adaptiver gewichteter Verbund-QoS-Indikator ist.

11. Computerprogrammprodukt, das von einem Kommunikationsnetz heruntergeladen werden kann und/oder auf einem durch einen Computer lesbaren Medium aufgezeichnet ist und/oder durch einen Prozessor ausführbar ist, wobei das Computerprogrammprodukt Programmcodeanweisungen zum Implementieren eines Verfahrens nach einem der Ansprüche 1 bis 9 umfasst.

12. Nichttransitorisches computerlesbares Medium, das ein Computerprogrammprodukt umfasst, das darauf aufgezeichnet ist und durch einen Prozessor ausgeführt werden kann, wobei das nichttransitorische computerlesbare Medium Programmcodeanweisungen zum Implementieren eines Verfahrens nach einem der Ansprüche 1 bis 9 enthält.

**Revendications**

1. Procédé de surveillance d'une qualité de conditions de transmission dans un réseau de communications, le procédé étant mis en oeuvre par un dispositif de surveillance connecté à un dispositif de transmission dans le réseau de communications, dans lequel le procédé comprend :

   - une première phase pour la détermination d'au moins un ensemble d'indicateurs QoS composites instantanés qui comprend au moins deux itérations parmi :
   - la capture (10) d'un élément de données représentant la valeur de chaque caractéristique parmi au moins trois caractéristiques spécifiques d'un signal, appelée une valeur capturée, et la délivrance d'au moins trois valeurs capturées ;
   - la normalisation (20) des valeurs capturées, selon un schéma de normalisation associé aux trois caractéristiques spécifiques du signal reçu, et la délivrance d'au moins trois valeurs normalisées ; et
   - le calcul (30) d'un indicateur QoS composite instantané, en fonction des au moins trois valeurs normalisées ; et
   - une deuxième phase pour la détermination (70) d'un indicateur QoS composite pondéré, en fonction dudit au moins un ensemble d'indicateurs QoS composites instantanés précédemment déterminé dans la première phase, la deuxième phase comprenant :
   - la multiplication d'un poids prédéterminé avec chaque indicateur QoS composite instantané de l'ensemble d'indicateurs QoS composites instantanés ;

   et dans lequel l'indicateur QoS composite pondéré est un indicateur QoS composite pondéré adaptatif.

2. Procédé selon la revendication 1, dans lequel le signal est un signal reçu et dans lequel les au moins trois caractéristiques spécifiques du signal reçu appartiennent au groupe comprenant :

   - un « taux PHY » de la dernière trame de données reçue par le dispositif de surveillance ;
   - un temps disponible restant pour une transmission « opportunité de Tx » ; et
   - un pourcentage de « tentatives de trame » de réception.

3. Procédé selon la revendication 1, dans lequel le signal est un signal de transmission et dans lequel les au moins trois caractéristiques spécifiques dudit signal de transmission appartiennent au groupe comprenant :

   - un « taux PHY » de la dernière trame de données transmise par ledit dispositif de surveillance ;
   - un temps disponible restant pour une transmission « opportunité de Tx » ; et
   - un pourcentage de « tentatives de trame » de transmission.

4. Procédé selon la revendication 1, dans lequel la première phase pour la détermination d'indicateurs QoS composites instantanés comprend :

   - le stockage de l'indicateur QoS composite instantané dans une mémoire du dispositif de surveillance ; et
   - l'arrêt du processus pendant une période de temps donnée.

5. Procédé selon la revendication 4, dans lequel la période de temps donnée est comprise entre 0,5 et 3 secondes.

6. Procédé selon la revendication 1, dans lequel la normalisation des valeurs capturées, selon un schéma de normalisation associé aux trois caractéristiques spécifiques du signal, comprend la transformation de chaque valeur capturée en un pourcentage représentant la qualité de la valeur capturée.

7. Procédé selon la revendication 1, dans lequel le calcul d'un indicateur QoS composite instantané en fonction des au moins trois valeurs normalisées comprend la multiplication de chaque valeur normalisée par chaque autre.

8. Procédé selon la revendication 1, dans lequel une deuxième phase pour la détermination d'indicateurs QoS composites pondérés comprend la sélection, parmi des indicateurs QoS composites instantanés disponibles, d'un ensemble d'indicateurs QoS composites instantanés représentant une période de temps prédéterminée.

9. Procédé selon la revendication 8, dans lequel la période de temps prédéterminée est égale à une minute.

10. Dispositif de surveillance (300) pour la surveillance d'une qualité de conditions de transmission dans un réseau de communications, connecté à un dispositif de transmission dans le réseau de communications, dans lequel le dispositif de surveillance comprend :

- un module de capture pour la capture d'un élément de données représentant la valeur de chaque caractéristique parmi au moins trois caractéristiques spécifiques du signal reçu, appelée une valeur capturée, et la délivrance d'au moins trois valeurs capturées ;

- un module de normalisation pour la normalisation des valeurs capturées, selon un schéma de normalisation associé aux trois caractéristiques spécifiques du signal reçu, et la délivrance d'au moins trois valeurs normalisées ; et

- une unité de calcul pour le calcul d'un indicateur QoS composite instantané, en fonction des au moins trois valeurs normalisées,

les trois modules précités étant mis en oeuvre de manière itérative pour la production d'au moins un ensemble d'indicateurs QoS composites instantanés ;

- un module de détermination pour la détermination d'un indicateur QoS composite pondéré, en fonction dudit au moins un ensemble d'indicateurs QoS composites instantanés précédemment calculé, le module de détermination comprenant une unité de multiplication pour la multiplication d'un poids prédéterminé avec chaque indicateur QoS composite instantané de l'ensemble d'indicateurs QoS composites instantanés,

et l'indicateur QoS composite pondéré est un indicateur QoS composite pondéré adaptatif.

11. Produit de programme informatique pouvant être téléchargé à partir d'un réseau de communication et/ou enregistré sur un support lisible par un ordinateur et/ou exécutable par un processeur, comprenant des instructions de code de programme pour mettre en oeuvre un procédé selon l'une quelconque des revendications 1 à 9.

12. Support non transitoire lisible par ordinateur comprenant un produit de programme informatique enregistré dessus et apte à être exécuté par un processeur, comportant des instructions de code de programme pour mettre en oeuvre un procédé selon l'une quelconque des revendications 1 à 9.

Figure 1

Figure 2

300

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2348680 A1

**Non-patent literature cited in the description**

- **HYUN JONG KIM.** *QoE assessment model for video streaming service using QoS parameters in wired-wireless network*

- **ZHU GUOWEI.** *User Mapping Strategies in Multi-Cloud Streaming: A Data-Driven Approach*